# EUROPEAN PATENT SPECIFICATION

(11) **EP 3 819 595 B1**
(45) Date of publication and mention of the grant of the patent: **11.10.2023**
(21) Application number: 20185568.1
(22) Date of filing: 13.07.2020
(51) Int. Cl.: G01C 21/32, G01C 21/36, G01C 21/00, G06F 16/29

(54) **METHOD FOR RENDERING MAP SCREEN FROM MAP DATA AND DATA PROCESSING APPARATUS PERFORMING THE SAME**
VERFAHREN ZUR DARSTELLUNG EINES KARTENBILDSCHIRMS AUS KARTENDATEN UND DATENVERARBEITUNGSVORRICHTUNG DAMIT
PROCÉDÉ DE RENDU D'UN ÉCRAN DE CARTE À PARTIR DE DONNÉES DE CARTE ET APPAREIL DE TRAITEMENT DE DONNÉES METTANT EN OEUVRE CE PROCÉDÉ

(30) Priority: 11.11.2019 KR 20190143549
(43) Date of publication of application: 12.05.2021
(73) Proprietor: Ratio LLC., Goyang-si, Gyeonggi-do 10523 (KR)
(72) Inventor: Jung, Won-Hyeong, 10526 Gyeonggi-do (KR)
(74) Representative: Manitz Finsterwald Patent- und Rechtsanwaltspartnerschaft mbB

(56) References cited:
- US-A1- 2013 147 820
- US-A1- 2015 308 841
- Wikipedia: "Pre-rendering - Wikipedia", Wikipedia, 24 September 2019 (2019-09-24), pages 1-4, XP055937216, Retrieved from the Internet: URL:https://en.wikipedia.org/w/index.php?t itle=Pre-rendering&oldid=917609892 [retrieved on 2022-06-30]

## Description

### TECHNICAL FIELD

The present invention relates to a method for rendering a map screen from map data performed by a data processing system installed in moving means, and a data processing system performing the same. More specifically, the present invention relates to a method for providing a display device with a map screen by pre-rendering the map screen for a predicted route on which the moving means is predicted to travel, and a data processing system performing the same.

### BACKGROUND

With the recent advancement of a bike market, a demand for a bike computer, which is attached to the moving means such as a bicycle and provides various convenience functions, is increasing. The bike computer is an electronic device that collects and calculates various information on riding, such as a speed, and displays the information on the screen. Recently, it has been common for a bike computer to be equipped with a navigation function that guides a rider to a current position or a route to a destination.

On the other hand, in general, a navigation system provides a function of guiding travel of the moving means by using signals transmitted by a plurality of satellites belonging to a global positioning system (GPS) and detection signals of sensors such as a gyro and a speed sensor, calculating a current position of the moving means which currently travels, matching the calculated current position of the moving means to digital map data, and then searching for a traveling route from the current position to the destination. In general, the navigation system simultaneously displays the position and the route of the moving means on a map screen, and generates the map screen provided to the user in real time to be displayed.

### [Prior Art Documents]

### [Patent Documents]

(Patent Document 1) Korean Patent Unexamined Publication No. 10-2016-0002105

US 2015/0308841 A1 discloses a map display system. A navigation apparatus transmits current position information to a server. The server predicts course data, based on the current position information, and transmits the course data back to the navigation apparatus. Also, the server distributes map data to the navigation apparatus. The navigation apparatus displays a map, including the course data, on a screen of a display portion.

US 2013/147820 A1 discloses a method of and a system for prefetching map data from a remote database.

### DISCLOSURE OF THE INVENTION

### PROBLEMS TO BE SOLVED BY THE INVENTION

A problem to be solved by the present invention is to provide a method for rendering a map screen in advance for a predicted route on which moving means is predicted to travel in the future and providing the map screen to a display device, and a data processing system performing the same.

### MEANS FOR SOLVING THE PROBLEMS

The problem is solved by a method according to claim 1 and a system according to claim 5. Advantageous embodiments are described by the dependent claims.

### EFFECTS OF THE INVENTION

According to an embodiment of the present invention, it is possible to provide a method for providing a display device with a map screen by pre-rendering the map screen for a predicted route on which the moving means is predicted to travel, and a data processing apparatus performing the same.

### BRIEF DESCRIPTION OF THE DRAWINGS

In order to fully understand the drawings cited in the detailed description of the present invention, a brief description of each drawing is provided.
FIG. 1 is a block diagram illustrating a driving environment of a data processing system according to an example of the present invention.
FIG. 2 is a flowchart illustrating an entire process of a method for rendering map screen performed by the data processing system according to an example of the present invention.
FIG. 3 is a flowchart illustrating step S110 of FIG. 2 in more detail.
FIG. 4 is a view illustrating a road determination function according to an example of the present invention.
FIG. 5 is a view illustrating an example of a map screen according to an example of the present invention.
FIG. 6 is a flowchart illustrating an example of step S140 of FIG. 2.
FIG. 7 is a view illustrating a situation before a method for specifying a predicted traveling route is performed.
FIGS. 8a to 8f are views illustrating a situation during the method for specifying a predicted traveling route is performed.
FIG. 9 is a flowchart illustrating an example of step S160 of FIG. 2 in more detail.
FIG. 10 is views illustrating whether a pre-rendering screen providing condition is satisfied.
FIG. 11 is a view illustrating a concept of pre-rendering in more detail.

### BEST MODE FOR CARRYING OUT THE INVENTION

Specific examples of the present invention will be illustrated in the drawings and described in detail in the detailed description.

Terms such as first and second may be used to describe various components, but the components should not be limited by the terms. The terms are used only for the purpose of distinguishing one component from other components.

The terms used in the present application are only used to describe specific examples and are not intended to limit the present invention. A singular expression includes a plural expression unless the context clearly indicates otherwise.

In the present specification, terms such as "include" or "have" are intended to designate the existence of features, numbers, steps, operations, components, parts, or combinations thereof described in the specification. It should be understood that they do not preclude the possibility of the existence or addition of other features or numbers, steps, operations, components, parts or combinations thereof.

In addition, in the present specification, when any one component 'transmits' data to another component, the component may directly transmit the data to the other component, or it means that the data may be transmitted to the other component through at least another component. Conversely, when one component 'directly transmits' data to other components, it means that the data is transmitted from the component to the other components without passing through another component.

Hereinafter, with reference to the accompanying drawings, the present invention will be described in detail focusing on examples of the present invention. The same reference numerals in respective drawings denote the same members.

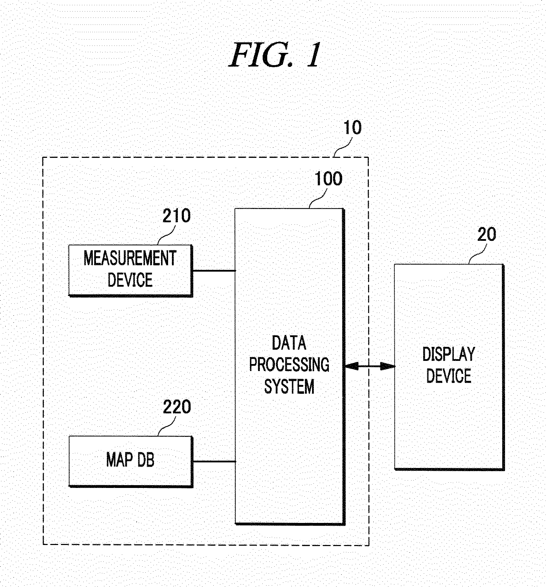

A method for rendering a map screen from map data according to an example of the present invention (hereinafter referred to as a 'map screen rendering method') may be performed by a data processing system. FIG. 1 is a block diagram illustrating a driving environment of a data processing system 100 according to an example of the present invention.

The data processing system 100 may be an information processing device or a combination of an information processing device and software installed on the information processing device.

In one example, the data processing system 100 may be an independent device. For example, the data processing system 100 may be a mobile device such as a smart phone or a tablet PC.

In another example, the data processing system 100 may be a subsystem mounted on a predetermined parent system 10, as illustrated in FIG. 1. For example, the data processing system 100 may be a subsystem mounted on a mobile device such as a smart phone or a tablet PC. Alternatively, the data processing system 100 may be a bike computer or a subsystem mounted on the bike computer.

In this case, the parent system 10 may include a measurement device 210 capable of measuring a position, a speed and/or an advancing direction, and/or a map DB 220. The data processing system 100 can receive various pieces of information, data, and signals necessary for performing the technical idea of the present invention from them and can control them as necessary.

In another example, the data processing system 100 performs communication with a mobile device such as a smart phone or a tablet PC and may perform the technical idea of the present invention. For example, the data processing system 100 may receive map data from the mobile device.

The data processing system 100 or the parent system (for example, the mobile device 10) may be installed in moving means. The moving means may be a bicycle, a motorcycle, an electric wheel, a Segway, a vehicle, a kickboard, or the like. However, this is only an example, and any movable means capable of measuring a speed and a moving distance may be the moving means to which the technical idea of the present invention can be applied. For example, the moving means may be shoes.

The data processing system 100 or the parent system 10 may be a device (for example, a bike computer) installed in the moving means, but is not limited thereto, and the data processing system 100 or the parent system 10 may be a device (for example, a mobile device) carried by an occupant of the moving means.

The data processing system 100 may obtain map information and position information, moving direction information, and/or speed information of the moving means in order to perform the map screen rendering method according to the technical idea of the present invention.

In one example, the data processing system 100 may obtain the position information and the advancing direction information of the moving means from the measurement device 210. According to an example, the measurement device 210 may include a GNSS device, an inertial measurement unit (IMU), and/or a speed sensor, but the technical idea of the present invention is not limited thereto.

In one example, the data processing system 100 may calculate the position information and the advancing direction information of the moving means from the information obtained through the IMU and the speed sensor. In some cases, the position information and the advancing direction information of the moving means can be calculated from the information obtained through the GNSS device, the IMU, and the speed sensor.

In addition, the data processing system 100 may obtain the map data from the map DB 220 as illustrated in FIG. 1. According to an example, the data processing system 100 may obtain the map data from a predetermined map DB server (not illustrated) connected through a wired/wireless network (for example, Internet). In this case, the map DB 220 to be described later may not exist in the parent system 10 but in the map DB server.

Meanwhile, the GNSS device that may be included in the measurement device 210 may be a device that receives a signal issued from a GNSS satellite. The GNSS refers to a system that enables positioning by using satellites, and may include, for example, the global positioning system (GPS) in the United States, the global navigation satellite system (GLONASS) in Russia, the Galileo in the EU, the BeiDu-2 in China, the QZSS in Japan, and the like. The GNSS device may calculate a position, a speed, and/or an advancing direction of the GNSS device or a device equipped with the GNSS device through a signal received from the GNSS satellite.

The IMU that may be included in the measurement device 210 is a device for measuring an inertia force or a device capable of measuring information on an inclination of a body, and may include an acceleration sensor measuring gravity and a gyro sensor measuring an angular acceleration. In some cases, it may further include a geomagnetic sensor.

A speed sensor that may be included in the measurement device 210 may be a sensor that measures the speed of the speed sensor or a device equipped with the speed sensor. Alternatively, the speed sensor may be a sensor capable of measuring data for calculating the speed. For example, the speed sensor may be a sensor (for example, a tachometer) that measures the number of revolutions of a wheel of the moving means. Alternatively, the speed sensor may be a sensor that measures a moving distance. In this case, the speed can be obtained by dividing the moving distance during the measurement time by a measurement time.

The map DB 220 may be means (for example, a memory device) for storing the map data. The map data may include road information on the map. For example, the map data may include information on a length or a width of a road located on a map, information on a name or identification of a road, information on a connection relationship between roads, and/or other information that may define a position and a shape of a road. In addition, the map data may further include information on a building or a facility, information on a point of interest (POI), and the like. The road may vary depending on the moving means in which the data processing system 100 or the parent system 10 is installed. When the moving means is a vehicle, the road may be a road through which the vehicle can pass. If the moving means is a bicycle, the road may further include a bicycle road.

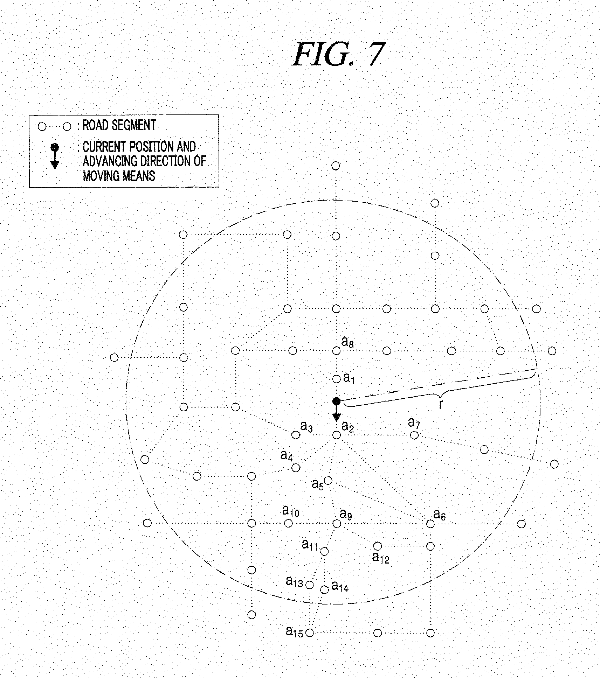

In particular, the map DB 220 may store map data configured in a form of road segments. The road segment can be a straight line or a curve between two connected points. The concept of the road segment can be seen in an example illustrated in FIG. 7. As can be seen in FIG. 7, roads may be represented in a form of a road network configured of road segments connected to each other. A road having no intersection in the middle and extending in a straight line may be represented by one road segment or may be represented by a form in which multiple road segments are connected to each other.

Meanwhile, the data processing system 100 may render a map screen from the map data and provide it to the display device 20. The display device 20 may be a device having display means capable of outputting the map screen. For example, the display device 20 may include a liquid crystal display (LCD), a light emitting diode (LED) display, or an OLED display. According to an example, the display device 20 may be a computing device (for example, a bike computer) including the display means.

The data processing system 100 and the display device 20 may be connected through a wireless network. For example, the data processing system 100 and the display device 20 may be connected through Bluetooth, short-range wireless communication (NFC), WIFI, ZigBee, or the like to perform communication. However, the present invention is not limited thereto, and according to an example, the data processing system 100 or the parent system 10 may be connected to the display device 20 through a physical connector.

According to an example, the display device 20 may be implemented in a form included in the parent system 10 or the data processing system 100.

As illustrated in FIG. 1, the data processing system 100 may be implemented in the form of the subsystem included in the predetermined parent system 10. The parent system 10 may be a mobile device, but is not limited thereto, and may be a computing system including a processor and a memory. In one example, the parent system 10 may include a GNSS device, an IMU, a speed sensor, and/or the map DB 220.

Meanwhile, according to an example, the data processing system 100 may be an independent system unlike that in FIG. 1. In addition, although FIG. 1 illustrates an example in which the measurement device 210 and the map DB 220 are included in the parent system 10, at least a part of the measurement device 210 and the map DB 220 according to an example may be included in the data processing system 100. In addition, there may be an example in which at least a part of the measurement device 210 and the map DB 220 is located outside the parent system 10.

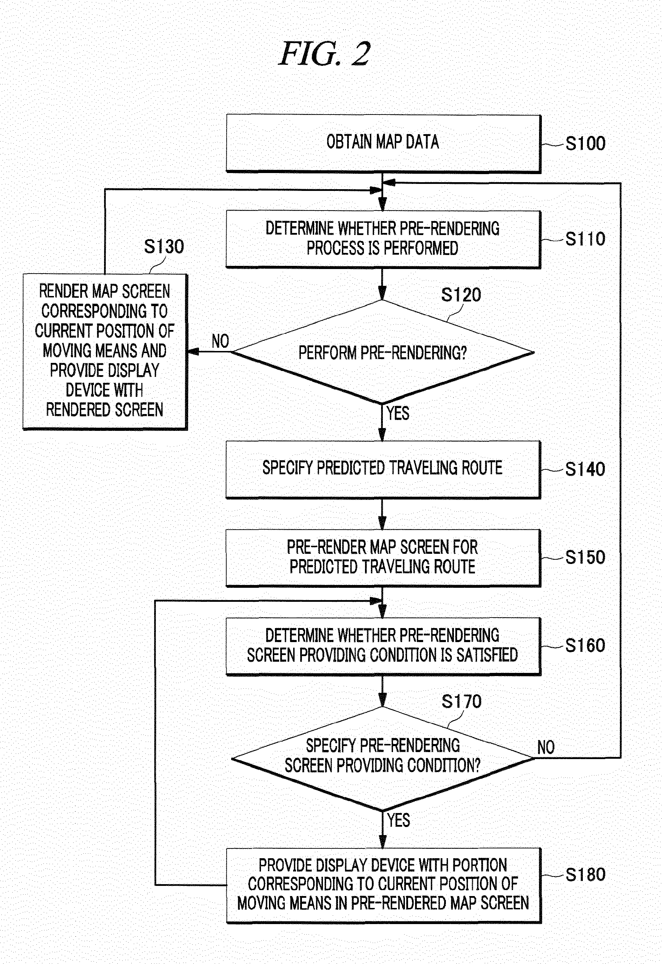

Hereinafter, the map screen rendering method will be described with reference to FIGS. 2 to 6. FIG. 2 is a flowchart illustrating an entire process of the map screen rendering method performed by the data processing system 100 according to an example of the present invention.

Referring to FIG. 2, the data processing system 100 may obtain map data (S100). The data may include a plurality of pieces of road segment information.

The data processing system 100 may obtain the entire map data or a part of the map data. In the latter case, the data processing system 100 may obtain the map data within a predetermined range from a current position of the moving means. The map data may include road information, and each road may be configured of road segments.

Road segments in the road data can configure a connection graph as a whole.

FIG. 7 is a view illustrating road segments included in the map data within a predetermined range from the current position of the moving means. FIG. 7 illustrates the road segments, and the current position and the advancing direction of the moving means. In FIG. 7, a white circle means a node of the road segment, and each road segment is represented by a dotted line connecting two nodes. Meanwhile, in FIG. 7, the current position and the advancing direction of the moving means are indicated by a black circle and an arrow.

Meanwhile, in the present specification and drawings including FIG. 7, the road segment is illustrated as having no direction, but this is for convenience of representation of the drawing, and each road segment may have a direction. In this case, it should be understood that even if the road segment is represented by a single line on the drawing, when the road segment is at least a part of the two-way road, the two-way road segment actually includes both road segments in opposite directions. For example, in FIG. 7, a road segment [a1-a2] is expressed as having no direction, but it should be understood that it actually includes both a unidirectional road segment [a1→a2] and a unidirectional road segment [a1←a2]. Of course, in a case of a road segment constituting at least a part of a one-way road, it should be regarded as a unidirectional road segment.

As illustrated in FIG. 2, the data processing system 100 may obtain the map data before other steps are performed, but is not limited thereto. Even in an intermediate step in which the map screen rendering method is performed, it is needless to say that the map data can be obtained without limitation if necessary.

Meanwhile, the data processing system 100 determines whether a pre-rendering process is performed (S110). The pre-rendering process may be a process in which a predicted traveling route predicted to be traveled by the moving means in the future is specified, and the pre-rendering is performed on the map screen for the specified predicted traveling route. The process will be described later.

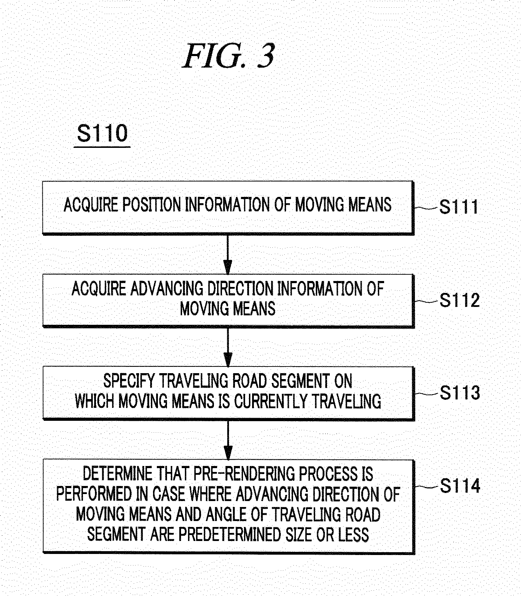

FIG. 3 is a flowchart illustrating step S110 of FIG. 2 in more detail.

Referring to FIG. 3, the data processing system 100 obtains the position information of the moving means and obtains the advancing direction information of the moving means (S111 and S112). For example, the data processing system 100 may obtain the position information and the advancing direction information of the moving means from the measurement device 210.

Thereafter, the data processing system 100 specifies a traveling road segment on which the moving means is currently traveling (S113).

In one example, the data processing system 100 may compare each road segment on the map data with the current position of the moving means, and determine a road segment closest to the current position of the moving means as the traveling road segment.

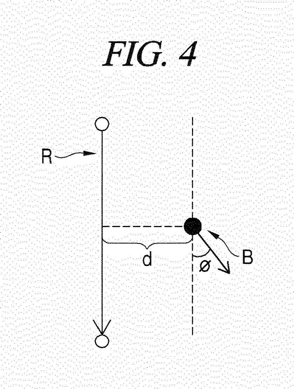

In another example, in order to specify the traveling road segment, the data processing system 100 may compare the position of the moving means with the position of each road segment, and the advancing direction of the moving means with the advancing direction of each road segment on the map data. For example, the data processing system 100 may receive the map data, the road segment information on the map data, and the position information and the advancing direction information of the moving means as parameters, and use a predetermined function (hereinafter referred to as a 'road segment determination function F') which determines whether the moving means is located on a specific road segment. FIG. 4 is referred to describe an example of the road segment determination function F. As illustrated in FIG. 4, when a shortest distance between the road segment R and the moving means B is d, and a difference between the advancing direction of the road R and the advancing direction of the moving means B is Φ, the road segment determination function F according to an example of the present invention may be a function defined by using d and Φ.

The data processing system 100 may calculate the F value for each road segment on the map data or each road segment within a predetermined range around the moving means to specify the traveling road segment on which the moving means is located. For example, in a case where the road segment in which the F value is a predetermined threshold or less is found, the data processing system 100 may determine that a road segment having the smallest F value among the road segments is a road segment on which the moving means is traveling. Alternatively, in a case where the data processing system 100 temporarily determines that the road segment having the smallest F value is a road segment on which the moving means is traveling, and temporarily determines that the moving means is continuously located in the road segment for a predetermined number of times or for a predetermined time period, the data processing system 100 can determine that the road segment is a road on which the moving means is traveling.

Meanwhile, in the determination of the traveling road, the speed of the moving means may be further considered. For example, the traveling road segment may be determined only in a case where the speed of the moving means is a predetermined value or more.

The above is only described to make it easy to understand the concept of the method for determining a road segment on which the moving means is traveling, and in addition, a method for specifying a road segment on which the moving means is traveling, which is performed by the data processing system 100, can be varied.

Meanwhile, after the traveling road segment is specified, the data processing system 100 determines whether the advancing direction of the moving means and an angle of the traveling road segment are a predetermined size or less. In a case where the advancing direction of the moving means and the angle of the traveling road segment are the predetermined size (predetermined threshold angle) or less, the data processing system 100 determines that the pre-rendering process is performed (S114). In a case where the advancing direction of the moving means and the angle of the traveling road segment are the predetermined size (the threshold angle) or more, the data processing system 100 determines that the pre-rendering process is not performed.

Referring back to FIG. 2, in step S110, in a case where it is determined that the pre-rendering process is not performed, the data processing system 100 renders a map screen corresponding to the current position of the moving means and provides the display device 20 with the rendered screen (S130).

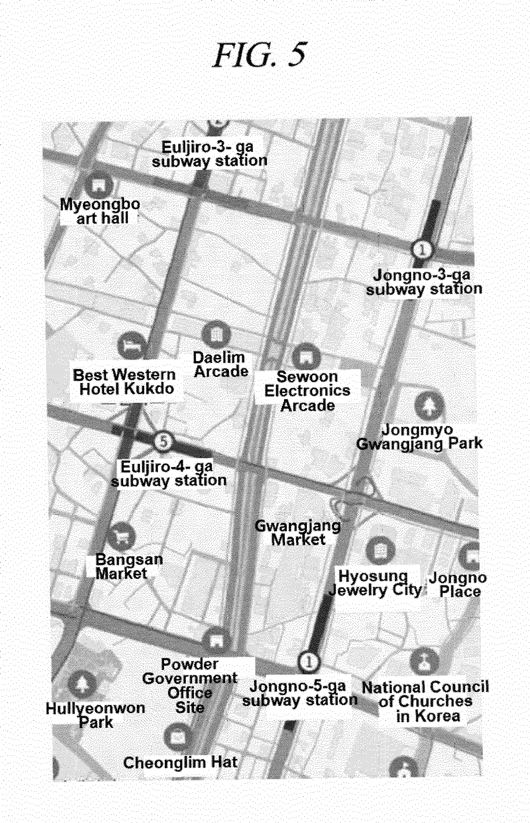

The rendered map screen may include a visual representation for a road existing within a predetermined range from a specific position (for example, the current position of the moving means). In addition, the rendered map screen may further include a visual representation for buildings, facilities, POIs, and the like existing within the range. FIG. 5 is a view illustrating an example of the map screen.

The display device 20 may display the provided map screen, and in some cases, may add and display a visual object indicating the current position of the moving means on the provided map screen.

Meanwhile, in step S110, in a case where it is determined that the pre-rendering process is performed, the data processing system 100 performs a process of specifying a predicted traveling route of the moving means (S140).

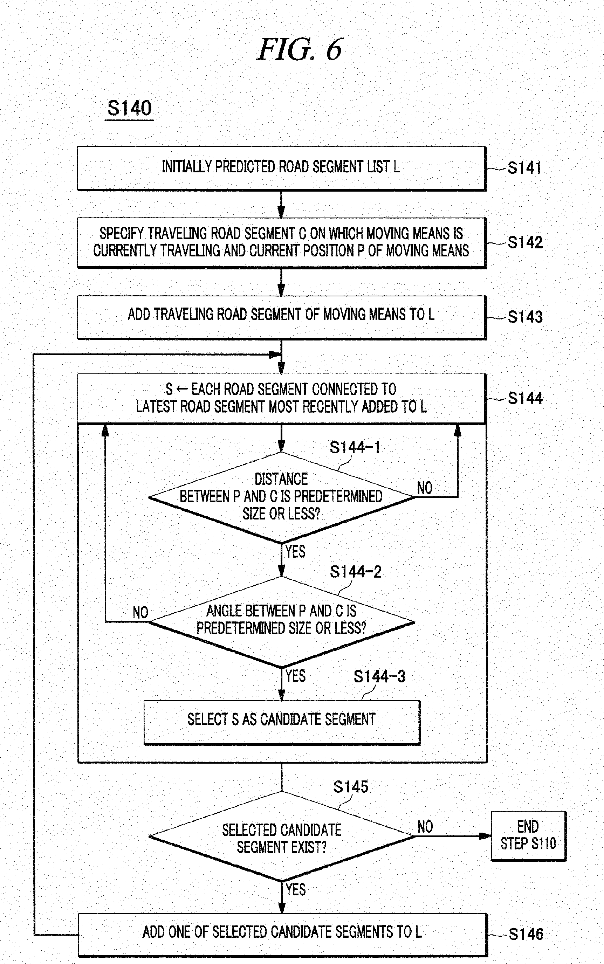

The predicted traveling route of the moving means is a route that the moving means is predicted to move in the future, and in one example of the present invention, the predicted traveling route of the moving means is specified by a method as illustrated in FIG. 6. FIG. 6 is a flowchart illustrating an example of step S140 of FIG. 2.

Referring to FIG. 6, the data processing system 100 initializes a predicted road segment list L which is a list for representing the predicted traveling route (S141).

The data processing system 100 specifies a traveling road segment C on which the moving means is currently traveling (S142). The traveling road segment may be specified based on the position information of the moving means or the position information and the moving direction information of the moving means, and a specific method for this is described above.

In addition, according to an example, the data processing system 100 may specify the current position (position of the moving means at the time of performing step S140) P of the moving means (S142). The data processing system 100 first adds the traveling road segment C of the moving means to the predicted road segment list L (S143).

Thereafter, the data processing system 100 performs steps S144-1 to S144-3 for each of the road segments connected to a latest road segment which is most recently added to the predicted road segment list L (S144).

When any one of the road segments connected to the latest road segment added to the predicted road segment list L is S, in a case where an angle between the road segment S and the initial road segment (that is, the traveling road segment C) initially added to the predicted road segment list is a predetermined size or less, and a distance from the current position P of the moving means is a predetermined size or less, the data processing system 100 selects the road segment S as a candidate segment (S144-1, S144-2, and S144-3). In another example, the data processing system 100 may select, as a candidate segment, a road segment of which a distance from not the current position P of the moving means but the initial road segment (for example, the traveling road segment C) is a predetermined size or less.

Meanwhile, a distance between a specific position and a specific road segment may be defined as a distance between the specific position and a specific point (for example, one of two end points, an intermediate point therebetween, or the like) on the specific road segment. Meanwhile, in a case where the candidate segment selected in step S144 exists, the data processing system 100 adds any one of the selected candidate segments to the predicted road segment list L (S145 and S146), and then perform the process again from step S144.

The method of adding any one of the selected candidate segments to the predicted road segment list L may vary.

In one example, the data processing system 100 may add, to the predicted road segment list, a segment, among the selected candidate segments, of which an angle with the initial road segment (that is, the traveling road segment C) initially added to the predicted road segment list L is the smallest.

In another example, the data processing system 100 may add, to the predicted road segment list, a segment, among the selected candidate segments, of which an angle with a road segment that most recently added to the predicted road segment list is smallest.

Alternatively, the data processing system 100 calculates an average value (average) or an intermediate value (median) of angles formed by respective road segments added to the predicted road segment list L to date, and may add, to the predicted road segment list, a segment, among the selected candidate segments, of which an angle with the average value or the intermediate value calculated already is the smallest.

Alternatively, the data processing system 100 may add a segment, among the selected candidate segments, selected from a predetermined selection server (not illustrated) to the predicted road segment list. In this case, in a case where a selection of any one of a plurality of road segments is requested, the selection server may be a server that performs a function of selecting a road segment on which the most moving means are traveling during a predetermined measurement period. That is, the selection server may collect information on the movement routes of various moving means from various devices during a predetermined measurement period, store information on how many moving means have passed for each road segment, and select any one of a plurality of road segments based on the accumulated information during the measurement period.

Alternatively, the data processing system 100 may predetermine an predicted route to a predetermined destination, select a road segment, among the selected candidate segments, existing on the predicted route, and add it to the predicted road segment list.

In step S144, in a case where all road segments connected to the latest road segment most recently added to the predicted road segment list L are separated at a predetermined distance or more from the initial road segment (that is, traveling road segment C) or the angle formed with the initial road segment is a predetermined size or more, none of the candidate segments may be selected. In this case, the data processing system 100 may end step S140 (see S145).

Meanwhile, according to an example, after the initial road segment (that is, the traveling road segment C) initially added to the predicted road segment L is removed from the predicted road segment list L, step S140 may be ended.

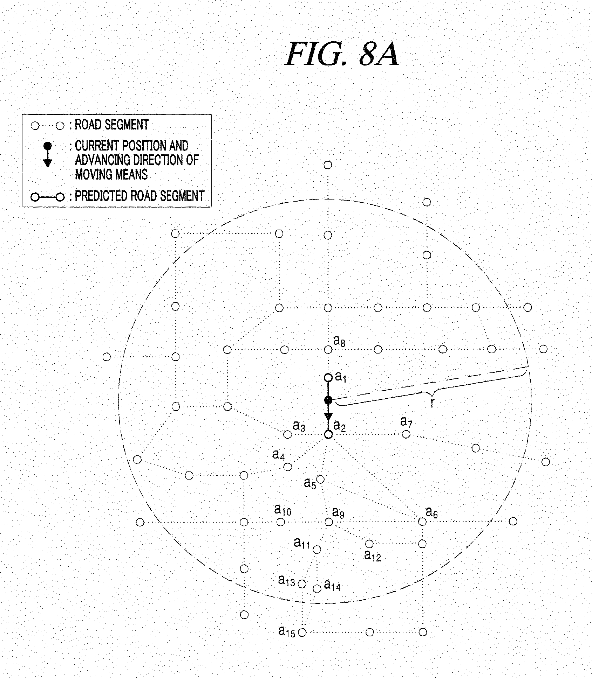

Hereinafter, a specific example of the method for specifying the predicted traveling route according to FIG. 6 will be described with reference to FIGS. 7 and 8a to 8f.

FIG. 7 is a view illustrating a situation before the method for specifying the predicted traveling route is performed. In FIG. 7, a part of road segments included in the map data, and the current position and the advancing direction of the moving means are illustrated. Referring to FIG. 7, the moving means is located on the road segment [a1→a2]. That is, in FIG. 7, the traveling road segment on which the moving means is currently traveling is [a1→a2].

The data processing system 100 may initialize the predicted road segment list L (S141). That is, L = {}.

The data processing system 100 may specify the traveling road segment [a1→a2] (S142), and initially add the traveling road segment [a1→a2] to the predicted road segment list L (S143). Therefore, L = {[a1→a2]}, and this situation is illustrated in FIG. 8a. The predicted road segments included in the predicted road segment list L are indicated by bold circles and solid lines in FIGS. 8a to 8f.

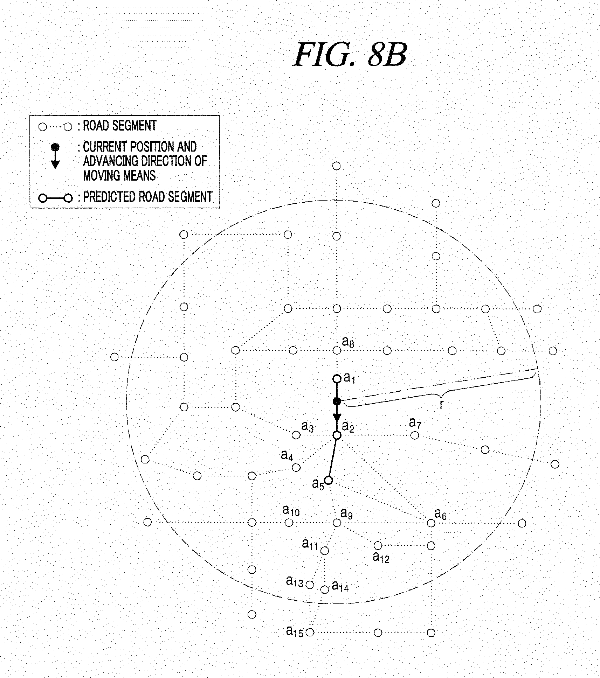

Among road segments [a2→a3], [a2→a4], [a2→a5], [a2→a6], and [a2→a7] connected to the road segment [a1→a2] most recently added to the predicted road segment list L, the data processing system 100 may select, as the candidate segments, road segments of which a distance from the traveling road segment [a1→a2] is a predetermined size r or less and an angle with the traveling road segment [a1→a2] is a predetermined size or less (S144), and add the traveling road segment [a2→a5] of which an angle difference with the traveling road segment [a1→a2] is the smallest to the predicted road segment list L (S146). Therefore, L = {[a1→a2], [a2→a5]}, and this situation is illustrated in FIG. 8b.

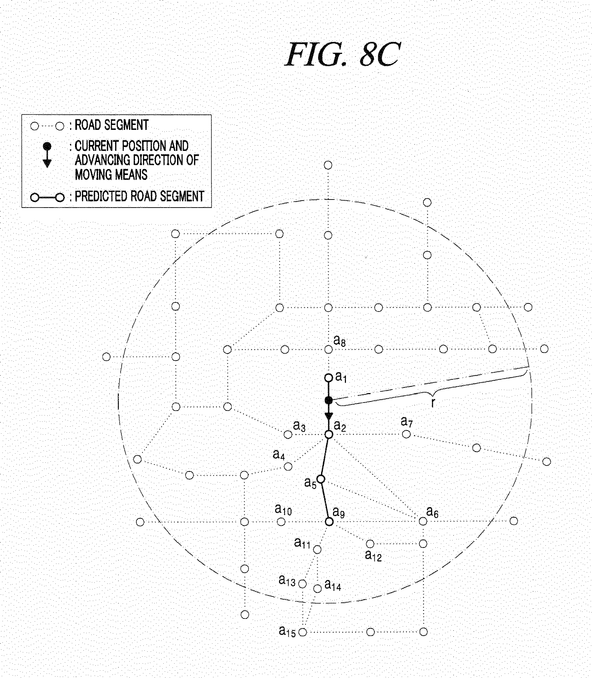

Among the road segment [a5→a9] and [a5→a6] connected to the road segment [a2→a5] most recently added to the predicted road segment list L, the data processing system 100 may select, as the candidate segment, a road segment of which a distance from the traveling road segment [a1→a2] is the predetermined size r or less and an angle with the traveling road segment [a1→a2] is a predetermined size or less (S144), and add the road segment [a5→a9], of which an angle difference with the traveling road segment [a1→a2] is smaller than that of the other, to the predicted road segment list L (S146). Therefore, L = {[a1→a2], [a2→a5], and [a5→a9]}, and this situation is illustrated in FIG. 8c.

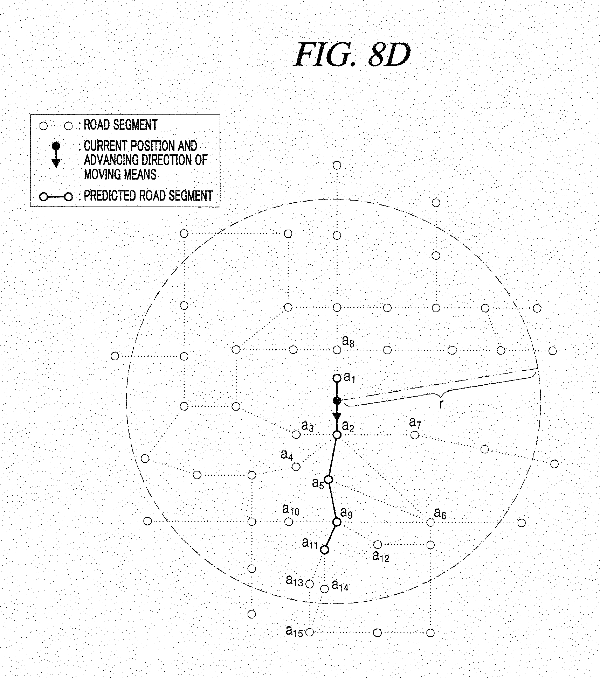

Among the road segment [a9→a10], [a9→a11], [a9→a12], and [a9→a6] connected to the road segment [a5→a9] most recently added to the predicted road segment list L, the data processing system 100 may select, as the candidate segment, a traveling road segment of which a distance from the traveling road segment [a1→a2] is the predetermined size r or less and an angle with the traveling road segment [a1→a2] is a predetermined size or less (S144), and add the road segment [a9→a11], of which an angle difference with the traveling road segment [a1→a2] is the smallest among the selected candidate segments, to the predicted road segment list L (S146). Therefore, L = {[a1→a2], [a2→a5], [a5→a9], and [a9→a11]}, and this situation is illustrated in FIG. 8d.

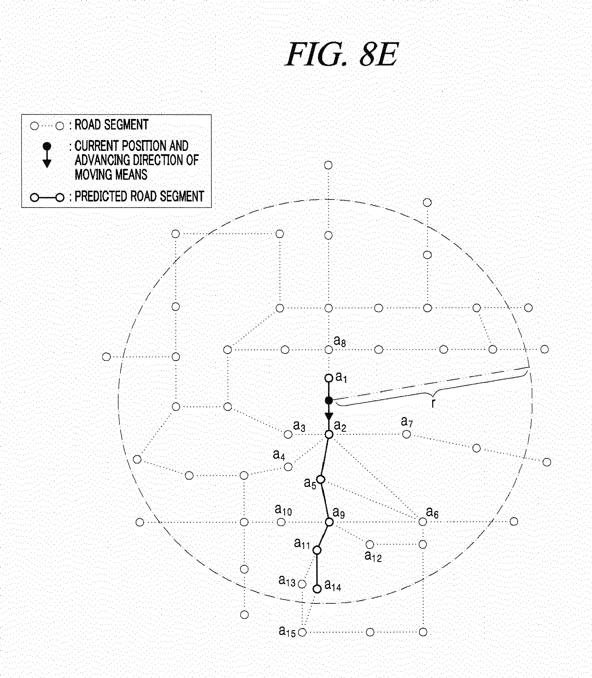

Among the road segment [a11→a13] and [a9→a11] and [a11→a14] connected to the road segment [a9→a11] most recently added to the predicted road segment list L, the data processing system 100 may select, as the candidate segment, a traveling road segment of which a distance from the traveling road segment [a1→a2] is the predetermined size r or less and an angle with the traveling road segment [a1→a2] is a predetermined size or less (S144), and add the traveling road segment [a11→a14], of which an angle difference with the traveling road segment [a1→a2] is the smallest among the selected candidate segments, to the predicted road segment list L (S146). Therefore, L = {[a1→a2], [a2→a5], [a5→a9], [a9→a11], and [a11→a14]}, and this situation is illustrated in FIG. 8e.

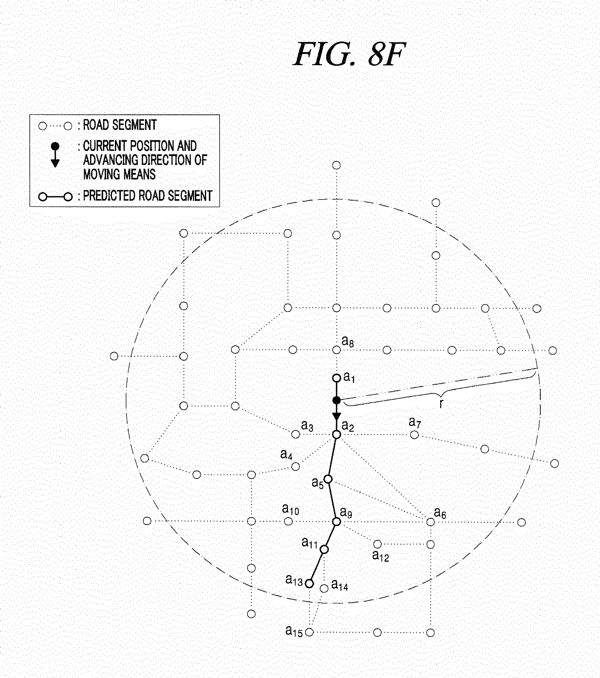

In a case where the example is implemented so that the data processing system 100 adds, to the predicted road segment list, the traveling road segment of which the angle difference with the most recently added road segment, which is not the traveling road segment, instead of FIG. 8e, as illustrated in FIG. 8f, the traveling road segment [a11→a13], of which an angle difference with the road segment [a9→a11] is the smallest, may be added to the predicted road segment list L.

Meanwhile, referring to FIG. 8e again, after the traveling road segment [a11→a14] is added, the data processing system 100 cannot select a traveling road segment, of which a distance from the traveling road segment [a1→a2] is the predetermined size r or less and an angle with the traveling road segment [a1→a2] is a predetermined size or less. Therefore, finally, the predicted road segment list L is specified as {[a1→a2], [a2→a5], [a5→a9], [a9→a11], and [a11→a14]}, and step S110 is terminated.

Referring back to FIG. 2, the data processing system 100 performs the pre-rendering process of the map screen for the predicted traveling route after the predicted traveling route is specified (S150).

The pre-rendering process of the map screen for the predicted traveling route may be a process of performing the pre-rendering of the map screen for the predicted traveling route included in the predicted road segment list L. The data processing system 100 may pre-render a map screen for a region within a predetermined range around the predicted traveling route. The pre-rendered map screen may include a visual representation for a road existing within the predetermined range from the predicted traveling route. In addition, the rendered map screen may further include a visual representation of buildings, facilities, POIs, and the like existing within the range.

On the other hand, in a case where the map screen is a bitmap image, in the pre-rendering process, the data processing system 100 may generate a bitmap image corresponding to the map screen. In a case where the map screen is to be implemented as a vector graphic, the data processing system 100 may generate vector information necessary for generating a vector image in the pre-rendering process.

After the pre-rendering process of the map screen for the predicted traveling route of the moving means is performed, the data processing system 100 provides the display device with a portion corresponding to the current position of the moving means in the map screen for the predicted traveling route of the moving means, which is pre-rendered while the predetermined pre-rendering screen providing condition is satisfied. That is, the data processing system 100 determines whether the pre-rendering screen providing condition is satisfied (S160), and in a case where the pre-rendering screen providing condition is satisfied, provide the display device 20 with a portion corresponding to the current position of the moving means in the map screen pre-rendered in step S150, and perform step S160 again. In a case where the pre-rendering screen providing condition is not satisfied, the data processing system 100 may perform step S110.

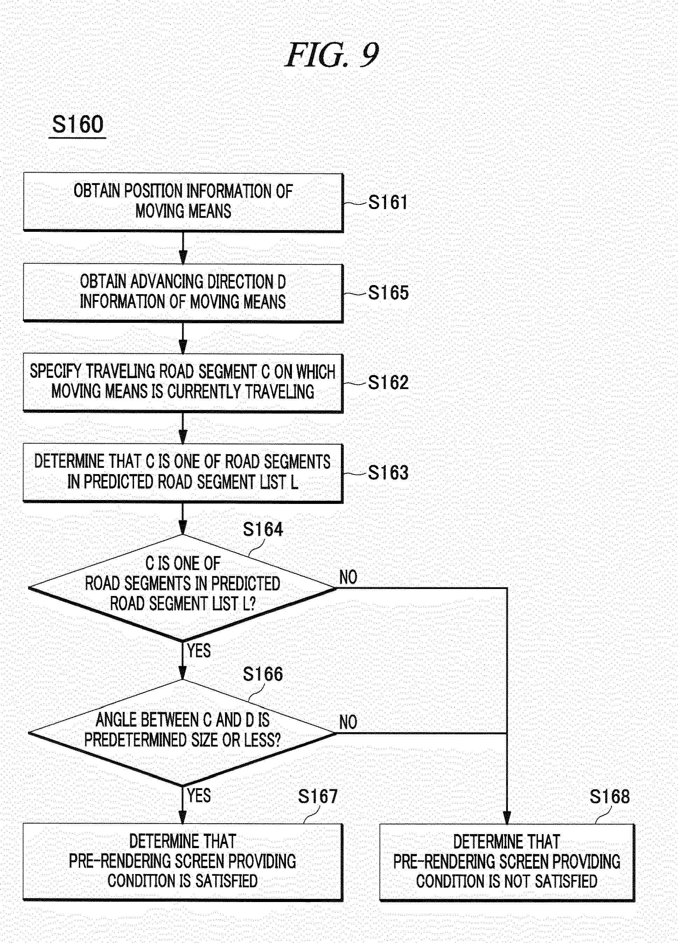

FIG. 9 is a flowchart illustrating an example of the step (that is, step S160 of FIG. 2) of determining whether the pre-rendering screen providing condition is satisfied.

Referring to FIG. 9, the data processing system 100 may obtain the position information of the moving means (S161) and obtain the advancing direction D information of the moving means (S162). Based on this, the data processing system 100 may specify the traveling road segment C on which the moving means is currently traveling (S162).

On the other hand, in a case where the traveling road segment C does not exist in the specific predicted road segment list L in step S140 earlier, or the angle between the traveling road segment C and the advancing direction D of the moving means is not a predetermined size or less, the data processing system 100 determines that the pre-rendering screen providing condition is not satisfied (S164, S166, and S168).

In a case where the traveling road segment C exists in the predicted road segment list L, and the angle between the traveling road segment C and the advancing direction D of the moving means is a predetermined size or less, the data processing system 100 determines that the pre-rendering screen providing condition is satisfied (S164, S166, and S167).

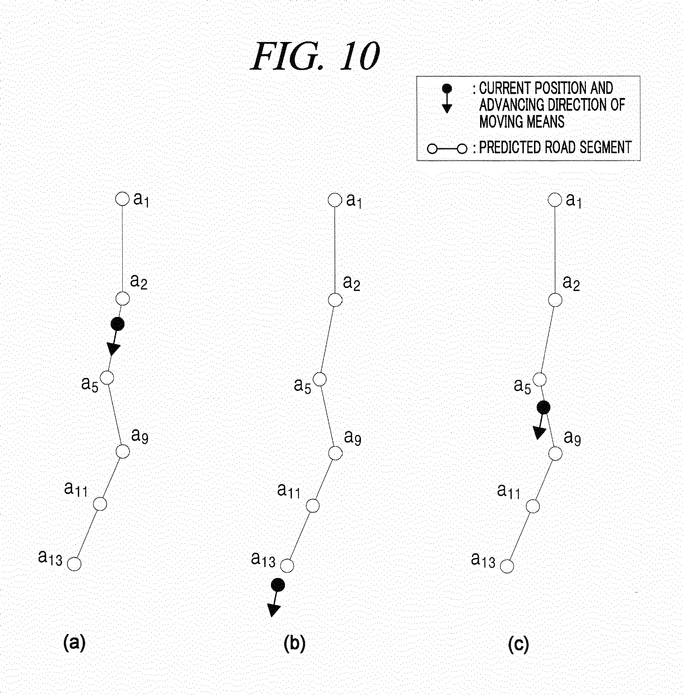

FIG. 10 is views illustrating whether the pre-rendering screen providing condition is satisfied. In the case of FIG. 10(a), since the moving means is located on the road segment [a2→a5], which is one of the currently predicted road segments, and the angle between the advancing direction of the moving means and the road segment [a2→a5] is a predetermined size or less, the data processing system 100 may determine that the pre-rendering screen providing condition is satisfied. However, in the case of FIG. 10(b), since the moving means is not located on the predicted road segment, and in the case of FIG. 10(c), the moving means is located on the road segment [a5→a9] which is one of the predicted road segments, but an angle difference between the road segment [a5→a9] and the traveling directions of the moving means is a predetermined size or more, the data processing system 100 may determine that the pre-rendering screen providing condition is not satisfied.

According to an example, the data processing system 100 may be implemented to determine whether the pre-rendering screen providing condition is satisfied only by whether the traveling road segment C exists in the predicted road segment list L.

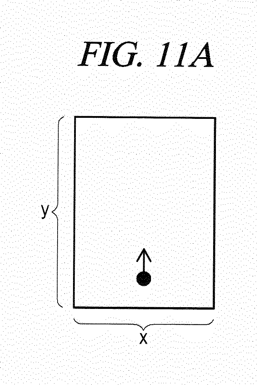

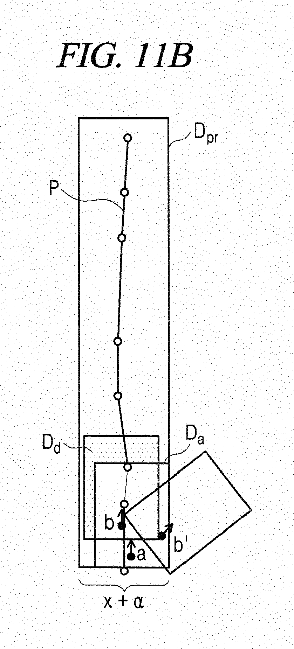

Hereinafter, a concept of the pre-rendering will be described in more detail with reference to FIGS. 11a and 11b. FIG. 11a illustrates the map screen for the moving means displayed on the display device 20. In FIG. 11a, x and y are respectively horizontal and vertical lengths of the screen.

FIG. 11b is a view illustrating a relationship between a pre-rendered region and the map screen for the moving means. In order to draw a map on the screen when the moving means is located at a position a, all objects on the map spanning a screen rectangle Da must be searched for and identified, placed at an appropriate angle on the screen, and then drawn. If the pre-rendering is not used, in a case where the moving means moves from the position a along a movement route P, it is necessary to repeat the entire process of searching and drawing, on the map, all objects that may be placed on the map.

The pre-rendering is a process of securing the road segment list in which the moving means can advance in a form close to a straight line, and drawing a region to be drawn when the moving means passes thereon by one object search on the map. That is, when the moving means is located at the position a, as illustrated in FIG. 11b, after obtaining the list P of the roads along the straight line predicted to be advanced forward, the entire region to be drawn on the map is drawn in advance when the moving means follows the roads. The region can be seen as a region Dpr of FIG. 11b. In this case, a width of the region is x+α, which is slightly larger than the width x of the screen. α is a marginal width for a case where the moving means moves from side to side rather than at the center of the road. Although the region to be drawn is large, it is possible to draw a map for the moving object for a long time by performing only one search for the object on overlapping maps in which a large amount of computation is performed. Thus, computational resources are saved and the number of rendering operations to be performed each time during the moving means moves along the roads is reduced thereby saving lot of resources.

In a case where the moving means moves from the position a to the position b in FIG. 11b, an additional region required for drawing the map screen is a darkly painted region Dd. Since the region Dd is included in the pre-rendered region c, it can be directly transmitted to the display device 20 without additional rendering. However, in a case where the moving means moves from the position a to a position b', an angle of a limit value or more is distorted in the linear movement, so that it is difficult to use the pre-rendered information. In this case, the map screen is newly rendered and transmitted to the display device 20.

The data processing system 100 may include a hardware resource and/or software necessary to implement the technical idea of the present invention and does not necessarily mean one physical component or one apparatus. That is, the data processing system 100 may mean a logical combination of hardware and/or software provided to implement the technical idea of the present invention, and if necessary, is installed in devices spaced apart from each other to perform each function. Therefore, the data processing system 100 may be implemented as a set of logical components for implementing the technical idea of the present invention. In addition, the data processing system 100 may mean a set of components that are separately implemented for each function or role for implementing the technical idea of the present invention.

In addition, in the present specification, the module may mean a functional and structural combination of hardware for performing the technical idea of the present invention and software for driving the hardware. For example, it can be easily deduced from average experts in the technical field of the present invention that the module may mean a logical unit of a predetermined code and a hardware resource for performing the predetermined code, and does not necessarily mean a physically connected code or a type of hardware.

Meanwhile, according to an implementation example, the data processing system 100 may include a processor and a memory storing a program executed by the processor. The processor may include a single-core CPU or a multi-core CPU. The memory may include a high-speed random access memory and may also include a non-volatile memory such as one or more magnetic disk storage devices, flash memory devices, or other non-volatile solid-state memory devices. Access to the memory by a processor and other components can be controlled by a memory controller. Here, in a case where the program is executed by the processor, the data processing system 100 according to the present example may be caused to perform the map screen rendering method described above.

On the other hand, the map screen rendering method according to the example of the present invention may be implemented in a form of a computer-readable program command and stored in a computer-readable recording medium. The control program according to the example of the present invention and a target program can also be stored in a computer-readable recording medium. The computer-readable recording medium includes all types of recording devices in which data readable by a computer system is stored.

The program command recorded on the recording medium may be specially designed and constructed for the present invention, or may be known, and available to those skilled in the software art.

Examples of computer-readable recording media include magnetic media such as a hard disk, a floppy disk, a magnetic media such as a magnetic tape, optical media such as a CD-ROM, and a DVD, magneto-optical media such as a floptical disk, and program instructions such as a ROM, a RAM, and a flash memory. The computer-readable recording medium can also be distributed to network coupled computer systems so that the computer readable code is stored and executed in a distributed fashion.

Examples of program commands include not only machine language codes produced by a compiler, but also devices that electronically process information by using an interpreter or the like, for example, high-level language codes executable by a computer.

The hardware device described above may be configured to operate as one or more software modules to perform the operation of the present invention, and vice versa.

It will be understood that the foregoing description of the present invention is for illustration only, and those skilled in the art to which the present invention pertains can easily transform into other specific forms without changing the technical idea or essential features of the present invention. Therefore, it should be understood that the examples described above are illustrative in all respects and not restrictive. For example, each component described as a single type may be implemented in a distributed manner, and similarly, components described as distributed may be implemented in a combined form.

## Claims

1. A method for rendering a map screen from map data, the method comprising:
(a) obtaining, by a data processing system (100), map data including a plurality of pieces of road segment information (S100);
(b) determining, by the data processing system (100), whether a pre-rendering process of the map screen is to be performed or not (S110);
(c) if it is determined that the data processing system (100) does not perform the pre-rendering process (S120), rendering, by the data processing system (100), the map screen corresponding to a current position of a moving means and providing a display device (20) with the rendered map screen (S130);
(d) if it is determined that the data processing system (100) performs the pre-rendering process (S120), performing, by the data processing system (100), a process of specifying a predicted traveling route of the moving means (S140) and performing the pre-rendering process of the map screen for the predicted traveling route (S150);
wherein the process of specifying the predicted traveling route of the moving means of the step (d) comprises:
(d1) initializing a predicted road segment list (S141);
(d2) initially adding the traveling road segment of the moving means to the predicted road segment list (S143), wherein the traveling road segment is a road segment on which the moving means is currently traveling;
(d3) selecting at least one candidate segment among the road segments connected to a latest road segment most recently added to the predicted road segment list (S144-3), wherein an angle difference between the candidate segment and an initial road segment initially added to the predicted road segment list is a predetermined size or less (S144-2), and a distance between the candidate segment and the current position of the moving means or between the candidate segment and the initial road segment is a predetermined size or less (S144-1);
(d4) adding any one of the at least one candidate segments to the predicted road segment list (S146); and
(d5) repeating the steps (d3) and (d4) until there is no more candidate segment,
(e) after the pre-rendering process of the map screen for the predicted traveling route of the moving means is performed:
(e1) determining whether a predetermined pre-rendering screen providing condition is met or not (S160, S170);
(e2) if the predetermined pre-rendering screen providing condition is met, providing the display device (20) with a portion of the map screen corresponding to the current position of the moving means in the map screen for the predicted traveling route of the moving means which is pre-rendered (S180); and
(e3) repeating the steps (e1) and (e2) until the predetermined pre-rendering screen providing condition is not met, and
wherein the step (e1) comprises determining whether or not the road segment on which the moving means is traveling is one of the road segments in the predicted road segment list based on the position of the moving means, and determining that the predetermined pre-rendering screen providing condition is not met if it is determined that the road segment is not one of the road segments in the predicted road segment list; and
(f) repeating the steps (b) to (e).

2. The method of claim 1,
wherein the step (d4) comprises:
adding a candidate segment of which an angle difference between the initial road segment is the smallest among the selected candidate segments, to the predicted road segment list;
adding a candidate segment of which an angle difference between the road segment most recently added to the predicted road segment list is smallest among the selected candidate segments, to the predicted road segment list; or
adding a candidate segment which is selected from a predetermined selection server among the selected candidate segments, to the predicted road segment list wherein the selection server selects a road segment on which the most moving means are traveling during a predetermined measurement period when being requested to select any one of a plurality of road segments.

3. The method of claim 1,
wherein the step (e1) further comprises
determining that the predetermined pre-rendering screen providing condition is not met if an angle difference between the advancing direction of the moving means and a direction of the road segment on which the moving means is traveling is a predetermined size or more.

4. A computer program installed in a data processing apparatus and stored in a recording medium to perform the method of any one of claims 1 to 3.

5. A data processing system comprising:
a processor; and
a memory storing a computer program executed by the processor, wherein the computer program, when being executed by the processor, causes the data processing system (100) to perform a method for rendering a map screen from map data,
wherein the method for rendering a map screen from map data comprises:
(a) obtaining, by the data processing system (100), map data including a plurality of pieces of road segment information (S100);
(b) determining, by the data processing system (100), whether a pre-rendering process of the map screen is to be performed or not (S110)
(c) if it is determined that the data processing system (100) does not perform the pre-rendering process (S120), rendering, by the data processing system (100), the map screen corresponding to a current position of a moving means and providing a display device (20) with the rendered map screen (S130);
(d) if it is determined that the data processing system (100) performs the pre-rendering process (S120), performing, by the data processing system (100), a process of specifying a predicted traveling route of the moving means (S140) and performing the pre-rendering process of the map screen for the predicted traveling route (S150);
wherein the process of specifying the predicted traveling route of the moving means of the step (d) comprises:
(d1) initializing a predicted road segment list (S141);
(d2) initially adding the traveling road segment of the moving means to the predicted road segment list (S143), wherein the traveling road segment is a road segment on which the moving means is currently traveling;
(d3) selecting at least one candidate segment among the road segments connected to a latest road segment most recently added to the predicted road segment list (S144-3), wherein an angle difference between the candidate segment and an initial road segment initially added to the predicted road segment list is a predetermined size or less (S144-2), and a distance between the candidate segment and the current position of the moving means or between the candidate segment and the initial road segment is a predetermined size or less (S144-1);
(d4) adding any one of the at least one candidate segments to the predicted road segment list (S146); and
(d5) repeating the steps (d3) and (d4) until there is no more candidate segment,
(e) after the pre-rendering process of the map screen for the predicted traveling route of the moving means is performed:
(e1) determining whether a predetermined pre-rendering screen providing condition is met or not (S160, S170);
(e2) if the predetermined pre-rendering screen providing condition is met, providing the display device (20) with a portion of the map screen corresponding to the current position of the moving means in the map screen for the predicted traveling route of the moving means which is pre-rendered (S180); and
(e3) repeating the steps (e1) and (e2) until the predetermined pre-rendering screen providing condition is not met, and
wherein the step (e1) comprises determining whether or not the road segment on which the moving means is traveling is one of the road segments in the predicted road segment list based on the position of the moving means, and determining that the predetermined pre-rendering screen providing condition is not met if it is determined that the road segment is not one of the road segments in the predicted road segment list; and
(f) repeating the steps (b) to (e).

## Patentansprüche

1. Verfahren zum Rendern eines Abbildungsbildschirms aus Abbildungsdaten, wobei das Verfahren umfasst, dass:
(a) durch ein Datenverarbeitungssystem (100) Abbildungsdaten, die eine Vielzahl von Elementen einer Straßensegmentinformation umfassen, erhalten werden (S100);
(b) durch das Datenverarbeitungssystem (100) ermittelt wird, ob ein Vorrenderungsprozess des Abbildungsbildschirms durchgeführt werden soll oder nicht (S110);
(c) wenn ermittelt wird, dass das Datenverarbeitungssystem (100) den Vorrenderungsprozess nicht durchführt (S120), durch das Datenverarbeitungssystem (100) der Abbildungsbildschirm, der einer aktuellen Position eines sich bewegenden Mittels entspricht, gerendert wird, und einer Anzeigeeinrichtung (20) der gerenderte Abbildungsbildschirm bereitgestellt wird (S130);
(d) wenn ermittelt wird, dass das Datenverarbeitungssystem (100) den Vorrenderungsprozess durchführt (S120), durch das Datenverarbeitungssystem (100) ein Prozess eines Spezifizierens einer vorhergesagten Fahrroute des sich bewegenden Mittels durchgeführt wird (S140) und der Vorrenderungsprozess des Abbildungsbildschirms für die vorhergesagte Fahrroute durchgeführt wird (S150);
wobei der Prozess des Spezifizierens der vorhergesagten Fahrroute des sich bewegenden Mittels von Schritt (d) umfasst, dass:
(d1) eine Liste vorhergesagter Straßensegmente initialisiert wird (S141);
(d2) anfänglich das Fahrstraßensegment des sich bewegenden Mittels zu der Liste vorhergesagter Straßensegmente hinzugefügt wird (S143), wobei das Fahrstraßensegment ein Straßensegment, auf dem das sich bewegende Mittel aktuell fährt, ist;
(d3) zumindest ein Kandidatensegment unter den Straßensegmenten, die mit einem neuesten Straßensegment verbunden sind, das jüngst der Liste vorhergesagter Straßensegmente hinzugefügt wurde, ausgewählt wird (S144-3), wobei eine Winkeldifferenz zwischen dem Kandidatensegment und einem anfänglichen Straßensegment, das anfänglich der Liste vorhergesagter Straßensegmente hinzugefügt wurde, eine vorbestimmte Größe oder weniger aufweist (S144-2), und eine Distanz zwischen dem Kandidatensegment und der aktuellen Position des sich bewegenden Mittels oder zwischen dem Kandidatensegment und dem anfänglichen Straßensegment eine vorbestimmte Größe oder weniger aufweist (S144-1);
(d4) ein beliebiges des zumindest einen Kandidatensegments zu der Liste vorhergesagter Straßensegmente hinzugefügt wird (S146); und
(d5) die Schritte (d3) und (d4) wiederholt werden, bis es kein Kandidatensegment mehr gibt,
(e) nach dem Vorrenderungsprozess des Abbildungsbildschirms für die vorhergesagte Fahrroute des sich bewegenden Mittels folgendes durchgeführt wird:
(e1) Ermitteln, ob eine vorbestimmte Vorrenderungs-Bildschirmbereitstellungsbedingung erfüllt ist oder nicht (S160, S170);
(e2) wenn die vorbestimmte Vorrenderungs-Bildschirmbereitstellungsbedingung erfüllt ist, Bereitstellen, für die Anzeigeeinrichtung (20), eines Abschnitts des Abbildungsbildschirms entsprechend der aktuellen Position des sich bewegenden Mittels in dem Abbildungsbildschirm für die vorhergesagte Fahrroute des sich bewegenden Mittels, die vorgerendert wird (S180); und
(e3) Wiederholen der Schritte (e1) und (e2), bis die vorbestimmte Vorrenderungs-Bildschirmbereitstellungsbedingung nicht erfüllt ist, und
wobei der Schritt (e1) umfasst, dass basierend auf der Position des sich bewegenden Mittels ermittelt wird, ob das Straßensegment, auf dem das sich bewegende Mittel fährt, eines der Straßensegmente in der Liste vorhergesagter Straßensegmente ist oder nicht, und ermittelt wird, dass die vorbestimmte Vorrenderungs-Bildschirmbereitstellungsbedingung nicht erfüllt ist,
wenn ermittelt wird, dass das Straßensegment nicht eines der Straßensegmente in der Liste vorhergesagter Straßensegmente ist; und
(f) die Schritte (b) bis (e) wiederholt werden.

2. Verfahren nach Anspruch 1,
wobei Schritt (d4) umfasst, dass:
ein Kandidatensegment, dessen Winkeldifferenz zwischen dem anfänglichen Straßensegment die kleinste unter den ausgewählten Kandidatensegmenten ist, zu der Liste vorhergesagter Straßensegmente hinzugefügt wird;
ein Kandidatensegment, dessen Winkeldifferenz zwischen dem jüngst zu der Liste vorhergesagter Straßensegmente hinzugefügten Straßensegment die kleinste unter den ausgewählten Kandidatensegmenten ist, zu der Liste vorhergesagter Straßensegmente hinzugefügt wird; oder
ein Kandidatensegment, das von einem vorbestimmten Auswahlserver unter den ausgewählten Kandidatensegmenten ausgewählt wird, zu der Liste vorhergesagter Straßensegmente hinzugefügt wird, wobei der Auswahlserver ein Straßensegment auswählt, auf dem die meisten sich bewegenden Mittel während einer vorbestimmten Messperiode bei einer Anforderung, eines einer Vielzahl von Straßensegmenten auszuwählen, fahren.

3. Verfahren nach Anspruch 1,
wobei der Schritt (e1) ferner umfasst, dass
ermittelt wird, dass die vorbestimmte Vorrenderungs-Bildschirmbereitstellungsbedingung nicht erfüllt ist, wenn eine Winkeldifferenz zwischen der Vorwärtsbewegungsrichtung des sich bewegenden Mittels und einer Richtung des Straßensegments, auf dem das sich bewegende Mittel fährt, eine vorbestimmte Größe oder mehr aufweist.

4. Computerprogramm, das in einer Datenverarbeitungsvorrichtung installiert und in einem Aufzeichnungsmedium gespeichert ist, um das Verfahren nach einem der Ansprüche 1 bis 3 durchzuführen.

5. Datenverarbeitungssystem, umfassend:
einen Prozessor; und
einen Speicher, der ein durch den Prozessor ausgeführtes Computerprogramm speichert, wobei das Computerprogramm bei einer Ausführung durch den Prozessor bewirkt, dass das Datenverarbeitungssystem (100) ein Verfahren zum Rendern eines Abbildungsbildschirms aus Abbildungsdaten durchführt, wobei das Verfahren zum Rendern eines Abbildungsbildschirms aus Abbildungsdaten umfasst, dass:
(a) durch das Datenverarbeitungssystem (100) Abbildungsdaten, die eine Vielzahl von Elementen einer Straßensegmentinformation umfassen, erhalten werden (S100);
(b) durch das Datenverarbeitungssystem (100) ermittelt wird, ob ein Vorrenderungsprozess des Abbildungsbildschirms durchgeführt werden soll oder nicht (S110);
(c) wenn ermittelt wird, dass das Datenverarbeitungssystem (100) den Vorrenderungsprozess nicht durchführt (S120), durch das Datenverarbeitungssystem (100) der Abbildungsbildschirm, der einer aktuellen Position eines sich bewegenden Mittels entspricht, gerendert wird, und einer Anzeigeeinrichtung (20) der gerenderte Abbildungsbildschirm bereitgestellt wird (S130);
(d) wenn ermittelt wird, dass das Datenverarbeitungssystem (100) den Vorrenderungsprozess durchführt (S120), durch das Datenverarbeitungssystem (100) ein Prozess eines Spezifizierens einer vorhergesagten Fahrroute des sich bewegenden Mittels durchgeführt wird (S140) und der Vorrenderungsprozess des Abbildungsbildschirms für die vorhergesagte Fahrroute durchgeführt wird (S150);
wobei der Prozess des Spezifizierens der vorhergesagten Fahrroute des sich bewegenden Mittels von Schritt (d) umfasst, dass:
(d1) eine Liste vorhergesagter Straßensegmente initialisiert wird (S141);
(d2) anfänglich das Fahrstraßensegment des sich bewegenden Mittels zu der Liste vorhergesagter Straßensegmente hinzugefügt wird (S143), wobei das Fahrstraßensegment ein Straßensegment, auf dem das sich bewegende Mittel aktuell fährt, ist;
(d3) zumindest ein Kandidatensegment unter den Straßensegmenten, die mit einem neuesten Straßensegment verbunden sind, das jüngst der Liste vorhergesagter Straßensegmente hinzugefügt wurde, ausgewählt wird (S144-3), wobei eine Winkeldifferenz zwischen dem Kandidatensegment und einem anfänglichen Straßensegment, das anfänglich der Liste vorhergesagter Straßensegmente hinzugefügt wurde, eine vorbestimmte Größe oder weniger aufweist (S144-2), und eine Distanz zwischen dem Kandidatensegment und der aktuellen Position des sich bewegenden Mittels oder zFwischen dem Kandidatensegment und dem anfänglichen Straßensegment eine vorbestimmte Größe oder weniger aufweist (S144-1);
(d4) ein beliebiges des zumindest einen Kandidatensegments zu der Liste vorhergesagter Straßensegmente hinzugefügt wird (S146); und
(d5) die Schritte (d3) und (d4) wiederholt werden, bis es kein Kandidatensegment mehr gibt,
(e) nach dem Vorrenderungsprozess des Abbildungsbildschirms für die vorhergesagte Fahrroute des sich bewegenden Mittels folgendes durchgeführt wird:
(e1) Ermitteln, ob eine vorbestimmte Vorrenderungs-Bildschirmbereitstellungsbedingung erfüllt ist oder nicht (S160, S170);
(e2) wenn die vorbestimmte Vorrenderungs-Bildschirmbereitstellungsbedingung erfüllt ist, Bereitstellen, für die Anzeigeeinrichtung (20), eines Abschnitts des Abbildungsbildschirms entsprechend der aktuellen Position des sich bewegenden Mittels in dem Abbildungsbildschirm für die vorhergesagte Fahrroute des sich bewegenden Mittels, die vorgerendert wird (S180); und
(e3) Wiederholen der Schritte (e1) und (e2), bis die vorbestimmte Vorrenderungs-Bildschirmbereitstellungsbedingung nicht erfüllt ist, und wobei der Schritt (e1) umfasst, dass basierend auf der Position des sich bewegenden Mittels ermittelt wird, ob das Straßensegment, auf dem das sich bewegende Mittel fährt, eines der Straßensegmente in der Liste vorhergesagter Straßensegmente ist oder nicht, und ermittelt wird, dass die vorbestimmte Vorrenderungs-Bildschirmbereitstellungsbedingung nicht erfüllt ist, wenn ermittelt wird, dass das Straßensegment nicht eines der Straßensegmente in der Liste vorhergesagter Straßensegmente ist; und
(f) die Schritte (b) bis (e) wiederholt werden.

## Revendications

1. Procédé de rendu d'un écran cartographique à partir de données cartographiques, comprenant les étapes consistant à :
(a) obtenir, par un système de traitement de données (100), des données cartographiques incluant une pluralité d'informations de segments de route (S100) ;
(b) déterminer, par le système de traitement de données (100), si un processus de pré-rendu de l'écran cartographique doit être effectué ou non (S110) ;
(c) s'il est déterminé que le système de traitement de données (100) n'effectue pas le processus de pré-rendu (S120), rendre, par le système de traitement de données (100), l'écran cartographique correspondant à une position actuelle d'un moyen en mouvement et fournir l'écran cartographique rendu (S130) à un dispositif d'affichage (20) ;
(d) s'il est déterminé que le système de traitement de données (100) effectue le processus de pré-rendu (S120), effectuer, par le système de traitement de données (100), un processus consistant à spécifier un itinéraire de déplacement prédit du moyen en mouvement (S140) et effectuer le processus de pré-rendu de l'écran cartographique pour l'itinéraire de déplacement prédit (S150) ;
dans lequel le processus consistant à spécifier l'itinéraire de déplacement prédit du moyen en mouvement de l'étape (d) comprend les étapes consistant à :
(d1) initialiser une liste de segments de route prédits (S141) ;
(d2) ajouter initialement le segment de route de déplacement du moyen en mouvement à la liste de segments de route prédits (S143), le segment de route de déplacement étant un segment de route sur lequel le moyen en mouvement est actuellement en train de se déplacer ;
(d3) sélectionner au moins un segment candidat parmi les segments de route reliés à un dernier segment de route ajouté le plus récemment à la liste de segments de route prédits (S144-3), une différence d'angle entre le segment candidat et un segment de route initial ajouté initialement à la liste de segments de route prédits étant d'une taille prédéterminée ou inférieure (S144-2), et une distance entre le segment candidat et la position actuelle du moyen en mouvement ou entre le segment candidat et le segment de route initial étant d'une taille prédéterminée ou inférieure (S144-1) ;
(d4) ajouter l'un quelconque desdits au moins un segment candidat à la liste de segments de route prédits (S146) ; et
(d5) répéter les étapes (d3) et (d4) jusqu'à ce qu'il n'y ait plus de segment candidat,
(e) après avoir effectué le processus de pré-rendu de l'écran cartographique pour l'itinéraire de déplacement prédit du moyen en mouvement :
(e1) déterminer si une condition prédéterminée pour fournir un écran de pré-rendu est remplie ou non (S160, S170) ;
(e2) si la condition prédéterminée pour fournir un écran de pré-rendu est remplie, fournir au dispositif d'affichage (20) une partie de l'écran cartographique correspondant à la position actuelle du moyen en mouvement dans l'écran cartographique pour l'itinéraire de déplacement prédit du moyen en mouvement qui est pré-rendu (S180) ; et
(e3) répéter les étapes (e1) et (e2) jusqu'à ce que la condition prédéterminée pour fournir un écran de pré-rendu ne soit pas remplie, et
dans lequel l'étape (e1) consiste à déterminer si le segment de route sur lequel le moyen en mouvement se déplace est ou non l'un des segments de route dans la liste de segments de route prédits sur la base de la position du moyen en mouvement, et à déterminer que la condition prédéterminée pour fournir un écran de pré-rendu n'est pas remplie s'il est déterminé que le segment de route n'est pas l'un des segments de route dans la liste de segments de route prédits ; et
f) répéter les étapes b) à e).

2. Procédé selon la revendication 1, dans lequel l'étape (d4) consiste à :
ajouter à la liste de segments de route prédits un segment candidat dont la différence d'angle entre le segment de route initial est la plus petite parmi les segments candidats sélectionnés ;
ajouter à la liste de segments de route prédits un segment candidat dont la différence d'angle entre le segment de route le plus récemment ajouté à la liste de segments de route prédits est la plus petite parmi les segments candidats sélectionnés ; ou
ajouter à la liste de segments de route prédits un segment candidat sélectionné par un serveur de sélection prédéterminé parmi les segments candidats sélectionnés, le serveur de sélection sélectionnant un segment de route sur lequel se déplacent le plus grand nombre de moyens en mouvement au cours d'une période de mesure prédéterminée lorsqu'il est invité à sélectionner l'un quelconque d'une pluralité de segments de route.

3. Procédé selon la revendication 1, dans lequel l'étape (e1) consiste en outre à déterminer que la condition prédéterminée pour fournir un écran de pré-rendu n'est pas remplie si une différence d'angle entre la direction d'avancement du moyen en mouvement et une direction du segment de route sur lequel le moyen en mouvement se déplace est d'une taille prédéterminée ou supérieure.

4. Programme informatique installé dans un appareil de traitement de données et stocké sur un support d'enregistrement pour mettre en oeuvre le procédé selon l'une des revendications 1 à 3.

5. Système de traitement de données comprenant :
un processeur ; et
une mémoire stockant un programme informatique exécuté par le processeur, dans lequel le programme informatique, lorsqu'il est exécuté par le processeur, amène le système de traitement de données (100) à mettre en oeuvre un procédé de rendu d'un écran cartographique à partir de données cartographiques,
dans lequel le procédé de rendu d'un écran cartographique à partir de données cartographiques comprend les étapes consistant à :
(a) obtenir, par le système de traitement de données (100), des données cartographiques incluant une pluralité d'informations de segments de route (S100) ;
(b) déterminer, par le système de traitement de données (100), si un processus de pré-rendu de l'écran cartographique doit être effectué ou non (S110) ;
(c) s'il est déterminé que le système de traitement de données (100) n'effectue pas le processus de pré-rendu (S120), rendre, par le système de traitement de données (100), l'écran cartographique correspondant à une position actuelle d'un moyen en mouvement et fournir l'écran cartographique rendu (S130) à un dispositif d'affichage (20) ;
(d) s'il est déterminé que le système de traitement de données (100) effectue le processus de pré-rendu (S120), effectuer, par le système de traitement de données (100), un processus consistant à spécifier un itinéraire de déplacement prédit du moyen en mouvement (S140) et effectuer le processus de pré-rendu de l'écran cartographique pour l'itinéraire de déplacement prédit (S150) ;
dans lequel le processus consistant à spécifier l'itinéraire de déplacement prédit du moyen en mouvement de l'étape (d) comprend les étapes consistant à :
(d1) initialiser une liste de segments de route prédits (S141) ;
(d2) ajouter initialement le segment de route de déplacement du moyen en mouvement à la liste de segments de route prédits (S143), le segment de route de déplacement étant un segment de route sur lequel le moyen en mouvement est actuellement en train de se déplacer ;
(d3) sélectionner au moins un segment candidat parmi les segments de route reliés à un dernier segment de route ajouté le plus récemment à la liste de segments de route prédits (S144-3), une différence d'angle entre le segment candidat et un segment de route initial ajouté initialement à la liste de segments de route prédits étant d'une taille prédéterminée ou inférieure (S144-2), et une distance entre le segment candidat et la position actuelle du moyen en mouvement ou entre le segment candidat et le segment de route initial étant d'une taille prédéterminée ou inférieure (S144-1) ;
(d4) ajouter l'un quelconque desdits au moins un segment candidat à la liste de segments de route prédits (S146) ; et
(d5) répéter les étapes (d3) et (d4) jusqu'à ce qu'il n'y ait plus de segment candidat,
(e) après avoir effectué le processus de pré-rendu de l'écran cartographique pour l'itinéraire de déplacement prédit du moyen en mouvement :
(e1) déterminer si une condition prédéterminée pour fournir un écran de pré-rendu est remplie ou non (S160, S170) ;
(e2) si la condition prédéterminée pour fournir un écran de pré-rendu est remplie, fournir au dispositif d'affichage (20) une partie de l'écran cartographique correspondant à la position actuelle du moyen en mouvement dans l'écran cartographique pour l'itinéraire de déplacement prédit du moyen en mouvement qui est pré-rendu (S180) ; et
(e3) répéter les étapes (e1) et (e2) jusqu'à ce que la condition prédéterminée pour fournir un écran de pré-rendu ne soit pas remplie, et
dans lequel l'étape (e1) consiste à déterminer si le segment de route sur lequel le moyen en mouvement se déplace est ou non l'un des segments de route dans la liste de segments de route prédits sur la base de la position du moyen en mouvement, et à déterminer que la condition prédéterminée pour fournir un écran de pré-rendu n'est pas remplie s'il est déterminé que le segment de route n'est pas l'un des segments de route dans la liste de segments de route prédits ; et
f) répéter les étapes b) à e).
